(19) Europäisches Patentamt
European Patent Office
Office européen des brevets

(11) **EP 4 752 783 A1**

(12) **EUROPÄISCHE PATENTANMELDUNG**

(43) Veröffentlichungstag:
03.06.2026   Patentblatt 2026/23

(21) Anmeldenummer: 24216346.7

(22) Anmeldetag: 29.11.2024

(51) Internationale Patentklassifikation (IPC):
**G06N 3/045** *(2023.01)*   **G06N 3/0475** *(2023.01)*
**G06N 3/09** *(2023.01)*   **G06N 3/047** *(2023.01)*
**G06N 3/0895** *(2023.01)*   **G06N 3/0464** *(2023.01)*

(52) Gemeinsame Patentklassifikation (CPC):
**G06N 3/09; G06N 3/045; G06N 3/0475;**
G06N 3/0455; G06N 3/0464; G06N 3/047;
G06N 3/0895

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: Fraunhofer-Gesellschaft zur
Förderung
der angewandten Forschung e.V.
80686 München (DE)

(72) Erfinder: **Geissler, Florian**
**81371 München (DE)**

(74) Vertreter: **Ramrath, Lukas**
**Patentanwälte Bressel und Partner mbB**
**Potsdamer Platz 10**
**10785 Berlin (DE)**

Bemerkungen:
Geänderte Patentansprüche gemäss Regel 137(2)
EPÜ.

(54) **VERFAHREN UND SYSTEM ZUR ERZEUGUNG VON MINDESTENS EINEM SYNTHETISCHEN DATENPUNKT, VERFAHREN UND SYSTEM ZUR KLASSIFIZIERUNG EINES EINGANGSDATENPUNKTS SOWIE COMPUTERPROGRAMMPRODUKT**

(57)    Die Erfindung betrifft ein Verfahren und ein System zur Erzeugung von mindestens einem synthetischen Datenpunkt, umfassend den Schritt:

• Erzeugen des mindestens einen synthetischen Datenpunkts (SD) mit einem maschinell erlernten generativen Modell (GM), wobei das generative Modell (GM) basierend auf einem Generierungs-Trainingsdatensatz (GTD) unter Verwendung einer Verlustfunktion trainiert ist, wobei die Verlustfunktion in Bezug auf eine Unähnlichkeit zwischen einem Trainings-Eingangsdatenpunkt (GTED) und einem mit dem generativen Modell (GM) erzeugten Ausgangsdatenpunkt eine monoton steigende Funktion ist, wobei die Verlustfunktion in Bezug auf eine Klassifizierbarkeit des erzeugten Ausgangsdatenpunkts durch ein maschinell erlerntes Klassifikationsmodell (KM) eine monoton fallende Funktion ist,

sowie ein Verfahren und ein System zur Klassifizierung eines Eingangsdatenpunkts sowie ein Computerprogrammprodukt.

Fig.1

**Beschreibung**

Die Erfindung betrifft ein Verfahren und ein System zur Erzeugung von mindestens einem synthetischen Datenpunkt, ein Verfahren und ein System zur Klassifizierung eines Eingangsdatenpunkts sowie ein Computerprogrammprodukt.

Klassifizierer, die mit Verfahren des maschinellen Lernens erzeugt wurden und nachfolgend auch als ML-Klassifizierer bezeichnet werden, werden in vielen Einsatzgebieten verwendet. In der medizinischen Diagnostik helfen solche Klassifizierer bei der Erkennung von Krankheiten anhand von Patienteninformationen oder Bilddaten (z.B. Röntgenbilder), im Finanzwesen können sie zur Betrugserkennung, Kreditwürdigkeitsbewertung und zur Risikoanalyse eingesetzt werden, in der Spracherkennung und -verarbeitung werden Klassifizierer verwendet, um Sprache in Text zu transkribieren oder Stimmungen in Texten zu erkennen, und in der Bild- und Objekterkennung dienen sie zur Identifizierung von Objekten in Bildern, insbesondere in der Automatisierung und Robotik.

In der Regel bestimmt ein Klassifizierer auf Basis von Eingangsdatenpunkten, z.B. in Form eines Bildes, eine Klasse, der dieser Eingangsdatenpunkt angehört. In der medizinischen Diagnostik könnte ein Röntgenbild einer Lunge als Eingangsdatenpunkt dienen, welches durch den Klassifizierer z.B. einer der Klassen "Verdacht auf Lungenentzündung", "Kein Verdacht auf Lungenentzündung" zugeordnet werden soll.

Problematisch beim Einsatz solcher Klassifizierer ist, dass die Ergebnisse für verrauschte Eingangsdatenpunkte nicht die gewünschte Qualität aufweisen. So können Klassifizierer für verrauschte Eingangsdatenpunkte ein falsches Ergebnis bestimmen. Ein weiteres Problem von Klassifizierern ist, dass insbesondere bei der Verwendung von komplexen Modellen viel Rechenleistung und Speicher benötigt wird, was besonders bei Echtzeitanwendungen problematisch sein kann. Ebenfalls problematisch ist, dass die Funktionsweise von Klassifizierern, z.B. wenn diese tiefe neuronale Netze (deep neural networks) verwenden, für einen menschlichen Nutzer nicht zwingend intuitiv interpretierbar sind. Das macht es schwierig, ihre Entscheidungen nachzuvollziehen.

In bestimmten Branchen (z.B. Finanzen, Medizin) können jedoch Anforderungen existieren, dass Entscheidungen eines Klassifizierers bis zu einem bestimmten Maß nachvollziehbar sein müssen.

ML-Klassifizierer werden in einem so genannten Training erzeugt bzw. bereitgestellt. Dieses erfolgt in mehreren Schritten. In einem Schritt einer Datenvorbereitung werden Trainings-Eingangsdatenpunkte (Features) und Trainings-Ausgangsdatenpunkte (Labels) gesammelt. Die Trainings-Eingangsdatenpunkte sind die Merkmale oder Informationen, die das Modell zur Klassifizierung nutzt, während die Trainings-Ausgangsdatenpunkte die korrekten Klassen (Kategorien oder Labels) sind, die den Trainings-Eingangsdatenpunkten zugeordnet werden.

Im Training wird dann der ML-Klassifizierer derart angepasst, dass auf Basis der Trainings-Eingangsdatenpunkte erzeugte Ausgangsdatenpunkte möglichst wenig von den Trainings-Ausgangsdatenpunkten abweichen. Er lernt somit, Muster und Zusammenhänge zwischen den Trainings-Eingangsdatenpunkten und den Trainings-Ausgangsdatenpunkten zu erkennen. In einer Evaluierung kann der ML-Klassifizierer mit einem separaten Testdatensatz evaluiert werden, um seine Genauigkeit und Leistung zu messen.

Für die Qualität der Klassifizierung sind hochwertige, relevante und gut vorverarbeitete Trainings-Eingangsdatenpunkte wichtig. Rauschen, unvollständige Daten oder irrelevante Merkmale können zu einem schlecht generalisierenden Modell führen. Auch die Bereitstellung von korrekten und repräsentativen Trainings-Ausgangsdatenpunkten ist wichtig. So können fehlerhafte oder verzerrte Klassen zu einer fehlerhaften Zuordnung von Eingangsdatenpunkten führen, was die Leistung des Modells beeinträchtigt. Auch die Nachvollziehbarkeit der Entscheidungen eines Klassifizierers hängt stark von der Qualität der Trainings-Eingangsdatenpunkte und der Trainings-Ausgangsdatenpunkte ab. Ein gut trainiertes Modell, das auf hochwertigen Daten basiert, ist in der Lage, transparente und konsistente Entscheidungen zu treffen. Wenn jedoch die Daten fehlerhaft oder unzureichend sind, kann es schwierig werden, die Modellentscheidungen zu verstehen und zu erklären, was das Vertrauen in das System beeinträchtigt. Im Kontext des Trainings ist auch zu berücksichtigen, dass ein ML-Klassifizierer auch bei verrauschten Eingangsdatenpunkten in der Lage sein sollte, ein korrektes Ergebnis zu bestimmen.

Die US2024/0202405 A1 offenbart ein Verfahren zur Analyse von Computersystemen, die einschließlich, aber nicht beschränkt auf solche, künstliche Intelligenz (KI) verwenden. Es wird beschrieben, dass ein oder mehrere Ersatzmodelle automatisch erzeugt werden, um Modelle und ihre Daten zu analysieren.

Die US 12,008,478 B2 bezieht sich allgemein auf das Training generativer Modelle unter Verwendung zusammenfassender Statistiken und insbesondere auf das Training oder die Anpassung generativer Modelle, so dass die von dem Modell erzeugten Daten bestimmte zusammenfassende Statistiken auf einer Populationsebene erfüllen.

Es stellt sich das technische Problem, ein Verfahren und ein System sowie ein Computerprogrammprodukt zur Erzeugung von synthetischen Datenpunkten zu schaffen, die das Bereitstellen eines robusten, effizienten und in seiner Funktionsweise möglichst nachvollziehbaren Klassifizierers ermöglichen. Weiter stellt sich das technische Problem, ein Verfahren und ein System sowie ein Computerprogrammprodukt zur Klassifizierung von Eingangsdatenpunkten zu schaffen, die eine korrekte Klassifizierung in robuster, effizienter und in nachvollziehbarer Weise ermöglichen.

Vorgeschlagen wird ein Verfahren zur Erzeugung von mindestens einem synthetischen Datenpunkt, vorzugsweise einer Vielzahl von verschiedenen synthetischen Datenpunkten. Diese(r) synthetische(n) Datenpunkt(e) kann/können zum Bereitstellen eines Klassifizierers verwendet werden, der ein ML-Klassifizierer sein kann, aber nicht zwingend sein muss. Dies wird nachfolgenden noch näher erläutert. Einem synthetischen Datenpunkt kann eine Klasse aus einer Menge vorbestimmter Klassen zugeordnet sein. Diese Klasse kann z.B. eine Eingangsgröße für das Verfahren zur Erzeugung des mindestens einen synthetischen Datenpunkts bilden. Mit anderen Worten kann also mit dem vorgeschlagenen Verfahren ein klassenspezifischer synthetischer Datenpunkt erzeugt werden, also ein synthetischer Datenpunkt, der zu der (vorbestimmten) Klasse gehört bzw. dieser zugeordnet ist.

Die Bereitstellung des Klassifizierers kann dann in Abhängigkeit des synthetischen Datenpunkts und der diesem Datenpunkt zugeordneten Klasse erfolgen. Wird der Klassifizierer durch ein Training bereitgestellt, so kann der synthetische Datenpunkt einen Trainings-Eingangsdatenpunkt und die ihm zugeordnete Klasse einen Trainings-Ausgangsdatenpunkt bilden.

Ein Datenpunkt, der auch ein Datensatz sein kann, kann insbesondere ein einzelner Wert, ein Vektor mit mehreren Elementen oder eine zwei-, drei- oder höherdimensionale Matrix sein. Selbstverständlich sind auch andere Formate von Datenpunkten vorstellbar, z.B. eine Textform. Ein- und Ausgangsdatenpunkte können in Form eines Signals oder in Form eines vorbestimmten Datenformats repräsentiert sein. Vorzugsweise kann ein Datenpunkt ein zwei- oder dreidimensionales Abbild sein, welches von einer entsprechenden Bilderfassungseinrichtung erzeugt wurde. Auch kann ein Datenpunkt eine Klasse repräsentieren.

In einem Erzeugungsschritt wird der mindestens eine synthetische Datenpunkt mit einem maschinell erlernten generativen Modell erzeugt. Dieses generative Modell ist basierend auf einem Generierungs-Trainingsdatensatz trainiert bzw. bereitgestellt. Das Training des generativen Modells kann in einem Trainingsschritt erfolgen, den das Verfahren ebenfalls umfassen kann. Der synthetische Datenpunkt kann insbesondere das von einer Bilderfassungseinrichtung erzeugte Abbild simulieren.

Das Training erfolgt unter Verwendung einer Verlustfunktion, wobei die Verlustfunktion mindestens in Bezug auf eine Unähnlichkeit zwischen einem Trainings-Eingangsdatenpunkt und einem mit dem generativen Modell erzeugten Ausgangsdatenpunkt eine monoton steigende Funktion ist.

Das Training generativer Modelle zielt generell darauf ab, ein Modell bereitzustellen, welches einen Ausgangsdatenpunkt erzeugt, der die gegebene Verlustfunktion minimiert.

Das generative Modell kann ein Modell sein, das ein Verfahren zum unüberwachten Lernen, zum semi-überwachten Lernen oder zum selbstüberwachten Lernen zur Anpassung von modellspezifischen Parametern benutzt. Bevorzugt, aber nicht zwingend, kann das generative Modell ein Diffusionsmodell sein. Besonders bevorzugt ist das generative Modell ein UNet-Modell, insbesondere ein UNet-Modell mit integrierten Restblöcken (residual blocks), wobei diese Restblöcke im Vergleich zu einem Standard-UNet-Modell modifiziert sein können. Auch kann das Modell ein GAN (generative adversial network) oder ein VAE (variational autoencoder) sein.

Ein Diffusionsmodell erzeugt in einer Diffusionsphase aus einem Eingangsdatenpunkt einen verrauschten Datenpunkt, indem der Eingangsdatenpunkt verrauscht wird. Dies kann schrittweise erfolgen, wobei dem Eingangsdatenpunkt in jedem Schritt eine Rauschgröße hinzugefügt wird. In einer Umkehrphase wird das Rauschen reduziert, insbesondere um den Eingangsdatenpunkt möglichst genau wieder herzustellen. Auch dies kann schrittweise erfolgen, wobei der verrauschte Datenpunkt, der ein Seed-Datenpunkt und somit eine Eingangsgröße für die Umkehrphase bildet, in jedem Schritt um eine Rauschgröße reduziert wird. Das Trainieren eines Diffusionsmodells erfolgt, indem als Trainings-Eingangsdatenpunkte solche Datenpunkte gewählt werden, die das Modell nach dem Training generieren soll. Für jeden der Trainings-Eingangsdatenpunkte wird dann die Diffusionsphase und die Umkehrphase durchgeführt.

Während des Trainings werden Parameter des generativen Modells in der Regel iterativ verändert, um einen Ausgangswert der Verlustfunktion zu minimieren. Je nach Modell können hierbei modellspezifische Parameter angepasst werden. Durch das Training anpassbare Parameter eines Diffusionsmodells können Gewichte und/oder Verknüpfungen und/oder eine Anzahl von Schichten und/oder eine Art von Aktivierungsfunktionen und/oder eine Anzahl von Neuronen in jeder Schicht sein. Auch können solche Parameter Rauschparameter, z.B. eine Rauschverteilung und/oder eine Rauschstärke, sein. Auch können solche Parameter Zeitparameter, z.B. die Anzahl der Diffusionsschritte und/oder der Umkehrschritte, sein. Es ist aber auch möglich, dass einige der genannten Parameter vorbestimmte und nicht anpassbare Parameter sind und insbesondere Eingangsgrößen für das Erzeugen eines Ausgangsdatenpunkts in einer Inferenzphase bilden.

Dass die Verlustfunktion in Bezug auf eine Unähnlichkeit zwischen einem Trainings-Eingangsdatenpunkt und einem mit dem generativen Modell (für diesen ausgewählten Trainings-Eingangsdatenpunkt) erzeugten Ausgangsdatenpunkt eine monoton steigende Funktion ist, kann bedeuten, dass ein Ausgangswert der Verlustfunktion sich nicht verringert, wenn ein Maß für die Unähnlichkeit, das einen Eingangswert (Argument) der Verlustfunktion bildet, ansteigt. Vorzugsweise ist die Verlustfunktion in Bezug auf die Unähnlichkeit eine streng monoton steigende Funktion. Diese Eigenschaft der Verlustfunktion schließt jedoch nicht aus, dass sich während des Trainings der Ausgangswert der Verlustfunktion auch erhöhen kann. Idealerweise verringert sich der Ausgangswert der Verlustfunktion während des Trainings mit Anpassung der Parameter monoton. Es kann jedoch auch vorkommen, dass ein im Training eingestellter neuer Parametersatz zu einer vorübergehenden Erhöhung der Verlustfunktion führt. Das Maß für die Unähnlichkeit kann die Unähnlichkeit quantitativ repräsentieren, z.B. in Form eines Unähnlichkeitswerts, und sich insbesondere mit zunehmender Unähnlichkeit vergrößern.

Das Training kann in Abhängigkeit von Ziel-Klassen einer Menge von vorbestimmten Ziel-Klassen erfolgen. So kann jedem Trainings-Eingangsdatenpunkt eine Ziel-Klasse aus einer Menge vorbestimmter Ziel-Klassen zugeordnet sein. Diese Zuordnung kann durch einen Experten erfolgen und auch als Annotation bezeichnet werden.

Z.B. kann das Training für jede Ziel-Klasse der Menge von vorbestimmten Ziel-Klassen erfolgen und es können zielklassenspezifische generative Modelle bereitgestellt werden. Vorzugsweise können jedoch die Trainings-Eingangsdatenpunkte eine Information über die Ziel-Klasse umfassen. Somit kann das generative Modell derart trainiert werden, dass es zielklassenspezifische Datenpunkte als Ausgangsdatenpunkte erzeugt.

Das erlernte generative Modell bzw. eine datenbasierte Repräsentation davon kann in abrufbarer Weise gespeichert werden, insbesondere in einer Speichereinrichtung.

Nach dem Beenden des Trainings kann das generative Modell in einer Inferenzphase dann Datenpunkte als Ausgangsdatenpunkte erzeugen. Hierfür kann insbesondere eine Ziel-Klasse vorgegeben werden, insbesondere in Form einer Eingangsgröße für die Inferenzphase. Selbstverständlich ist es vorstellbar, dass zusätzlich noch weitere Eingangsgrößen berücksichtigt werden. Ist das generative Modell z.B. ein Diffusionsmodell, so kann eine weiteren Eingangsgröße ein Rauschparameter und/oder ein Zeitparameter sein. Diese Eingangsgrößen können Parameter für die Erzeugung des Ausgangsdatenpunkts bilden.

Bei Verwendung eines Diffusionsmodells kann in der Inferenzphase ein zufällig verrauschter Datenpunkt erzeugt werden. Dieser bildet eine Eingangsgröße für eine Umkehrphase. Hierdurch ergibt sich in vorteilhafter Weise, dass ein auf Basis des mindestens einen synthetischen Datenpunkts gebildeter Klassifizierer weniger anfällig für Eingangsdatenpunkte ist, die durch Rauschen gestört sind. Insbesondere kann die durch das Training bestimmte Umkehrphase ausgeführt werden, um das Rauschen in dem zufällig verrauschten Datenpunkt zu reduzieren. So kann das Diffusionsmodell die im Training gelernten Parameter verwenden, um den zufällig verrauschten Datenpunkt zu entrauschen, also das Rauschen zu reduzieren, insbesondere schrittweise. Weiter kann das generative Modell bei jedem Schritt berechnen, wie der verrauschte Datenpunkt im aktuellen Zustand (weiter) verändert werden sollte. Dies geschieht durch das Anwenden des ebenfalls im Training gelernten neuronalen Netzwerks auf den aktuellen, also schrittspezifischen Zustand des (teilweise) entrauschten Datenpunkts.

Wie vorhergehend erläutert, wird in dem Erzeugungsschritt ein synthetischer Datenpunkt mit dem derart trainierten generativen Modell erzeugt, insbesondere in einer Inferenzphase, also als Ausgangsdatenpunkt des generativen Modells. Insbesondere kann ein zielklassenspezifischer synthetischer Datenpunkt erzeugt werden. Dies wurde vorhergehend bereits erläutert. Ist das generative Modell ein UNet-Modell, so können insbesondere die erläuterten Restblöcke derart angepasst sein, dass die erläuterten Eingangsgrößen, wie z.B. die gewünschte Ziel-Klasse und/oder der gewünschte Zeitparameter, bei der Erzeugung des Ausgangsdatenpunkts berücksichtigt werden können.

Erfindungsgemäß ist die Verlustfunktion in Bezug auf eine Klassifizierbarkeit des im Training erzeugten Ausgangsdatenpunkts, also des für einen ausgewählten Trainings-Eingangsdatenpunkt erzeugten Ausgangsdatenpunkts, durch ein maschinell erlerntes Klassifikationsmodell eine monoton fallende Funktion. Das Klassifikationsmodell kann ein vorbestimmtes Modell sein. Das Klassifikationsmodell ordnet einem Eingangsdatenpunkt einen Ausgangsdatenpunkt in Form einer Klasse zu, insbesondere einer Klasse der Menge von vorbestimmten Ziel-Klassen. Das Klassifikationsmodell kann ein für diesen Zweck trainiertes und anwendungsabhängig gewähltes Modell und insbesondere durch ein Verfahren zum überwachten Lernen erzeugtes Modell sein. Beispielsweise kann es ein neurales Netz sein, insbesondere ein DL-Modell wie ein CNN (convolutional neural network), ein RNN (recurrent neural network), ein LSTM-Netzwerk (long short-term memory network) oder ein Modell der Transformer-Familie (Transformer-Modell). Vorzugsweise ist das Klassifikationsmodell ein so genanntes ResNet-Modell. Dieses kann anwendungs- bzw. datensatzabhängig gewählt werden.

Die Klassifizierbarkeit bezeichnet hierbei, wie gut bzw. korrekt der durch das generative Modell erzeugte Datenpunkt einer Ziel-Klasse, insbesondere einer Ziel-Klasse der vorhergehend erläuterten Menge vorbestimmter Ziel-Klassen, zugeordnet werden kann. Beim Training des generativen Modells bezeichnet die Klassifizierbarkeit also, wie gut bzw. korrekt der durch das generative Modell für einen ausgewählten Trainings-Eingangsdatenpunkt erzeugte Ausgangsdatenpunkt der Ziel-Klasse zugeordnet werden kann, die - wie vorhergehend erläutert - dem Trainings-Eingangsdatenpunkt zugeordnet ist.

Ein Maß für die Klassifizierbarkeit kann diese Klassifizierbarkeit quantitativ repräsentieren, z.B. in Form eines Werts, und sich insbesondere vergrößern, je besser bzw. je korrekter die Zuordnung erfolgt. Z.B. kann das Maß für die Klassifizierung als ein vorbestimmter erster Wert bestimmt werden, wenn das Ergebnis der Klassifizierung korrekt ist. Das Maß für die Klassifizierung kann als ein vorbestimmter zweiter Wert bestimmt werden, wenn das Ergebnis der Klassifizierung nicht korrekt ist. Der zweite Wert kann kleiner als der erste Wert sein. Eine korrekte Klassifizierung kann dann vorliegen, wenn die durch die Klassifizierung bestimmte Ziel-Klasse der Ziel-Klasse entspricht, die dem Trainings-Eingangsdatenpunkt zugeordnet ist.

Dass die Verlustfunktion in Bezug auf die Klassifizierbarkeit eine monoton fallende Funktion ist, kann bedeuten, dass ein Ausgangswert der Verlustfunktion sich nicht erhöht, wenn ein Maß für die Klassifizierbarkeit, das einen (weiteren) Eingangswert (Argument) der Verlustfunktion bildet, ansteigt. Vorzugsweise ist die Verlustfunktion in Bezug auf die Klassifizierbarkeit eine streng monoton fallende Funktion. Diese Eigenschaft der Verlustfunktion schließt jedoch ebenfalls nicht aus, dass sich während des Trainings der Ausgangswert der Verlustfunktion auch erhöhen kann.

Zusammenfassend wird also beim Training des generativen Modells eine Verlustfunktion verwendet, die einen Ausgangswert in Abhängigkeit von mindestens zwei Eingangswerten (Argumenten), nämlich einem Maß für die Unähnlichkeit und einem Maß für die Klassifizierbarkeit, erzeugt und bezüglich dieser Eingangswerte die erläuterten Monotonieeigenschaften aufweist.

Durch Auswertung der Verlustfunktion kann für jedes Argumententupel ein Ausgangswert bestimmt werden. Das Argumententupel umfasst als Argumente genau oder mindestens das Maß für die Unähnlichkeit sowie das Maß für die Klassifizierbarkeit. Die Verlustfunktion kann hierbei einen funktionellen Zusammenhang zwischen den Argumenten eines solchen Tupels und einem Ausgangswert repräsentieren. Auch kann der Zusammenhang ein vorbestimmter Zusammenhang sein, der in Form einer abrufbaren Zuordnung, z.B. in Form einer Look-Up-Tabelle, gegeben ist. Es ist möglich, dass aus den Argumenten des Tupels in einem Zwischenschritt der Auswertung der Verlustfunktion ein fusionierter Wert bestimmt wird, z.B. eine lineare Kombination wie eine Summation der Argumente, wobei der Ausgangswert der Verlustfunktion dann auf Basis des fusionierten Werts bestimmt wird. Dann kann die Verlustfunktion einen funktionellen Zusammenhang oder einen vorbestimmten Zusammenhang zwischen dem fusionierten Wert und einem Ausgangswert repräsentieren.

Das vorgeschlagene Verfahren ermöglicht in vorteilhafter Weise die Erzeugung von synthetischen Datenpunkten, die Eigenschaften aufweisen, die nachfolgend das Bereitstellen eines robusten, bezüglich des Rechenaufwands effizienten und in seiner Funktionsweise möglichst nachvollziehbaren Klassifizierers ermöglichen, wobei dieser Klassifizierer eine hohe Klassifikationsgenauigkeit aufweist. So weisen die synthetisch durch das generative Modell erzeugten Datenpunkte aufgrund der Verlustfunktion sowohl die Eigenschaft auf, dass sie ähnlich zu den Trainings-Eingangsdatenpunkten und somit auch ähnlich zu Datenpunkten einer vorbestimmten Ziel-Klasse sind, als auch die Eigenschaft, dass sie zuverlässig klassifizierbar sind. Das derart trainierte generative Modell ermöglicht in vorteilhafter Weise die Erzeugung einer hohen Anzahl von synthetischen Datenpunkten mit diesen Eigenschaften, die wiederum zur Bereitstellung eines robusten, effizienten und nachvollziehbaren Klassifizierers genutzt werden können. Insbesondere wird durch die synthetischen Datenpunkte die wahre, klassenweise Musterverteilung der Trainingsdaten angenähert. So kann die Problematik vermieden werden, dass aufgrund einer geringen Anzahl und/oder nicht repräsentativer Trainings-Eingangsdatenpunkte kein zuverlässiger Klassifizierer bereitgestellt werden kann.

Der derart gebildete Klassifizierer, der auch als Ersatzmodell bezeichnet werden kann, kann eine viel geringere Komplexität als das Klassifikationsmodell haben, was in schnelleren Inferenzzeiten und niedrigeren Berechnungskosten resultiert, wobei jedoch die Genauigkeit vergleichbar mit dem Klassifikationsmodell sein kann. Da die synthetischen Datenpunkte die für das Klassifikationsmodell relevantesten Eigenschaften der Trainingsdaten für die Klassifizierung aufweisen, kann auch eine Interpretation der Ergebnisse der Klassifizierung vereinfacht werden.

In einer weiteren Ausführungsform repräsentiert ein erstes Argument der Verlustfunktion die Unähnlichkeit und ein weiteres Argument die Klassifizierbarkeit. Dies wurde vorhergehend erläutert, womit auch auf die entsprechenden technischen Vorteile verwiesen werden kann.

In einer weiteren Ausführungsform werden die Unähnlichkeit und die Klassifizierbarkeit bei der Auswertung der Verlustfunktion verschieden gewichtet. Hierdurch können in vorteilhafter Weise die Eigenschaften des generativen Modells und der von diesem erzeugten Ausgangsdatenpunkte in gewünschter Weise, insbesondere anwendungsabhängig, angepasst werden. Wird z.B. die Unähnlichkeit im Vergleich zu einer Referenzgewichtung niedriger und gegebenenfalls sogar die Klassifizierbarkeit höher gewichtet, so wird das entsprechend trainierte generative Modell Ausgangsdatenpunkte erzeugen, die weniger ähnlich zu den Trainings-Eingangsdatenpunkten, dafür aber besser klassifizierbar als die Ausgangsdatenpunkte sind, die mit einem basierend auf der Referenzgewichtung trainierten Modell erzeugt wurden.

In einer weiteren Ausführungsform wird das maschinell erlernte Klassifikationsmodell mit einem Klassifikations-Trainingsdatensatz trainiert, wobei der Klassifikations-Trainingsdatensatz als Trainings-Eingangsdatenpunkte zumindest einen Teil, vorzugsweise jeden, der Trainings-Eingangsdatenpunkte des Generierungs-Trainingsdatensatz umfasst. Weiter kann der Klassifikations-Trainingsdatensatz auch die datenpunktspezifischen Ziel-Klassen umfassen, also die dem jeweiligen Trainings-Datenpunkt zugeordnete Ziel-Klasse. Diese Ziel-Klasse kann einen Trainings-Ausgangsdatenpunkt des Klassifikations-Trainingsdatensatz bilden, der dem jeweiligen Trainings-Eingangsdatenpunkt zugeordnet ist.

Auch das Klassifikationsmodell kann in einer so genannten Trainingsphase trainiert werden, wobei der erläuterte Trainingsdatensatz verwendet werden kann. Ein solcher Trainingsdatensatz kann erzeugt werden, indem - wie vorhergehend bereits erläutert - ein Experte für einen Trainings-Eingangsdatenpunkt einen Trainings-Ausgangsdatenpunkt erzeugt bzw. vorgibt. Dies kann auch als Annotation bezeichnet werden. Trainingsdaten können hierbei anwendungsabhängig ausgewählt sein. Bei einer bildbasierten Qualitätsprüfung können Trainings-Eingangsdaten Abbilder von zu prüfenden Objekten sein, während Trainings-Ausgangsdaten eine Qualität des abgebildeten Objekts repräsentieren oder repräsentieren, ob das abgebildete Objekt vorbestimmte Qualitätsanforderungen erfüllt.

In der Trainingsphase können Parameter, insbesondere Gewichte und/oder Verknüpfungen, des Klassifikationsmodells derart angepasst werden, dass eine Abweichung zwischen den vom Klassifikationsmodell für die Trainings-Eingangsdatenpunkte erzeugten Ausgangsdatenpunkte möglichst wenig von den Trainings-Ausgangsdatenpunkten abweichen. Auch dieses Training kann schrittweise erfolgen, wobei in jedem Trainingsschritt mindestens ein Parameter des Klassifikationsmodells verändert wird. Nach dem Training bzw. dem letzten Trainingsschritt kann das erlernte Klassifikationsmodell vorliegen. Das Training kann vor der ersten Durchführung des Verfahrens erfolgen. Auch das erlernte Klassifikationsmodell bzw. eine datenbasierte Repräsentation davon kann in abrufbarer Weise gespeichert werden, insbesondere in einer Speichereinrichtung.

Es ist möglich, dass der Klassifikations-Trainingsdatensatz zusätzlich zu den Trainings-Eingangsdatenpunkten des Generierungs-Trainingsdatensatz noch weiteren Trainings-Datenpunkte (Eingangs- und Ausgangsdatenpunkte) umfasst.

Durch Verwenden von Trainingsdaten zum Trainieren des Klassifikationsmodells, welches dann wie vorhergehend erläutert beim Training des generativen Modells zur Klassifizierung der im Training erzeugten Ausgangsdatenpunkte verwendet wird, die auch zum Trainieren des generativen Modells verwendet werden, ergibt sich in vorteilhafter Weise eine qualitativ hochwertige Erzeugung von synthetischen Datenpunkten im Hinblick auf die vorgenannten Kriterien. Dies ergibt sich insbesondere daraus, dass das derart trainierte Klassifikationsmodell die Klassifizierbarkeit der durch das generative Modell erzeugten Ausgangsdaten korrekt beurteilen kann. Wird das Klassifikationsmodell - wie nachfolgend noch erläutert - beim Erzeugen der Ausgangsdatenpunkte durch das generative Modell im Rahmen einer Inferenz verwendet, so kann hierdurch eine zeitlich schnelle und effiziente hochwertige Erzeugung erfolgen, insbesondere da durch Auswertung des vom Klassifikationsmodell erzeugten Ausgangsdatenpunkts (Prototyps) beurteilt werden kann, in welchem Iterationsschritt der Erzeugung eines Ausgangsdatenpunkts durch das generativen Modell beendet werden kann, wobei der Ausgangsdatenpunkt eine ausreichende Qualität aufweist.

In einer bevorzugten Ausführungsform umfasst der Klassifikations-Trainingsdatensatz zusätzlich noch Rausch-Eingangsdatenpunkte. Diesen Rausch-Eingangsdatenpunkten kann eine Rausch-Klasse als Ziel-Klasse und Trainings-Ausgangsdatenpunkt zugeordnet sein. Es ist auch möglich, dass Rausch-Eingangsdatenpunkte verwendet werden, die verschiedenen Rausch-Klassen aus einer Menge von mehreren Rausch-Klassen zugeordnet sind.

In dieser Ausführungsform kann die Rausch-Klasse Teil der Menge vorbestimmter Ziel-Klassen für das Training des Klassifikationsmodells sein. Allerdings werden Rausch-Eingangsdatenpunkte nicht zwingend zum Trainieren des generativen Modells verwendet. Mit anderen Worten wird das generative Modell nicht zwingend darauf trainiert, dass Rausch-Datenpunkte erzeugt werden. Es ist jedoch auch vorstellbar, dass das generative Modell zum Erzeugen zuverlässig klassifizierbarer Rausch-Datenpunkte trainiert wird, insbesondere von Rausch-Datenpunkten verschiedener Rausch-Klassen.

Somit wird das Klassifikationsmodell derart trainiert, dass es Eingangsdatenpunkte auch als Rausch-Datenpunkte klassifizieren kann. Insbesondere können vom generativen Modell erzeugte Ausgangsdatenpunkte somit auch als Rausch-Datenpunkte klassifiziert werden. Hierdurch ergibt sich in vorteilhafter Weise, dass mit dem Klassifikationsmodell während der schrittweisen Ausführung der vorhergehend erläuterten Umkehrphase ein Übergang von einem Rausch-Datenpunkt zu einem nicht mehr als Rausch-Datenpunkt klassifizierten Datenpunkt Rauschen detektiert werden kann. Dieser Übergang kann zum Abbruch des Datenpunkterzeugung mit dem generativen Modell genutzt werden. Hierdurch ist es in vorteilhafter Weise möglich, dass ein generatives Modell in weniger Trainingsiterationen trainiert werden kann, um dann korrekt klassifizierbare Ausgangsdatenpunkte zu erzeugen. Es kann notwendig sein, dass Klassifikationsmodelle, z.B. Modelle mit Batchnorm-Schichten, derart anzupassen, dass Rausch-Datenpunkte zuverlässig klassifiziert werden können.

In einer weiteren Ausführungsform werden die Rausch-Eingangsdatenpunkte gemäß eines vorbestimmte Rauschmodells erzeugt. Das vorbestimmte Rauschmodell kann insbesondere ein Modell für ein weißes Rauschen sein. Hierdurch ergibt sich in vorteilhafter Weise eine einfache Bereitstellung von Rausch-Eingangsdatenpunkten. Auch ergibt sich in vorteilhafter Weise, dass eine Anpassung der Erzeugung von Ausgangsdatenpunkten durch das generative Modell an die Klassifikation erfolgen kann, insbesondere wenn Rausch-Datenpunkte mit gleichen Eigenschaften für die Erzeugung dieser Ausgangsdatenpunkte verwendet werden. Hierdurch kann der vorhergehend erläuterte Übergang noch zuverlässiger detektiert und die Effizienz des Trainings des generativen Modells weiter verbessert werden.

In einer weiteren Ausführungsform ist ein Eingangsdatenpunkt für einen Inferenzprozess bzw. eine Inferenzphase unter Anwendung des generativen Modells ein Rausch-Eingangsdatenpunkt, der gemäß einem Rauschmodell erzeugt wird, welches zum Erzeugen von Rausch-Eingangsdatenpunkten für das Training des Klassifikationsmodells dient. Der Eingangsdatenpunkt kann insbesondere den vorhergehend erläuterten Seed-Datenpunkt für die Inferenzphase, insbesondere die Umkehrphase, bilden. Hierdurch wird die erläuterte Anpassung mit den ebenfalls erläuterten technischen Vorteilen implementiert.

In einer weiteren Ausführungsform werden in einem Inferenzprozess unter Anwendung des generativen Modells schrittweise verschiedene Ausgangsdatenpunkt-Instanzen erzeugt, wobei nach jedem Schritt geprüft wird, ob die im jeweiligen Schritt erzeugte Ausgangsdatenpunkt-Instanz ein vorbestimmtes Abbruchkriterium erfüllt, wobei der synthetischen Datenpunkt als die im Schritt erzeugte Datenpunkt-Instanz bestimmt wird, wenn das Abbruchkriterium erfüllt ist. Der Inferenzprozess kann die Ausführung der vorhergehend erläuterten Inferenzphase, und bei einem Diffusionsmodell insbesondere die Ausführung der Umkehrphase, umfassen. Durch die Prüfung, ob ein Abbruchkriterium erfüllt ist, kann in vorteilhafter Weise die zur Erzeugung des Datenpunkts benötigte Zeitdauer sowie der benötigte Rechenaufwand reduziert werden, insbesondere da zumindest in manchen Fällen nicht die maximale Anzahl an Schritten im Inferenzprozess durchgeführt werden muss.

In einer weiteren Ausführungsform ist das Abbruchkriterium erfüllt, wenn die Datenpunkt-Instanz mit dem Klassifikationsmodell korrekt klassifizierbar ist. Insbesondere kann nach jedem Schritt eine Klassifikation der Datenpunkt-Instanz mit dem Klassifikationsmodell durchgeführt werden, wobei die Datenpunkt-Instanz als Eingangsdatenpunkt für das Klassifikationsmodell dient. Die Datenpunkt-Instanz ist z.B. korrekt klassifizierbar, wenn das Klassifikationsmodell als Ausgangsdatenpunkt die Ziel-Klasse bestimmt, die für die Inferenzphase vorgegeben war. Hierdurch kann in vorteilhafter Weise erreicht werden, dass ein aussagekräftiger synthetischer Datenpunkt für eine bestimmte Ziel-Klasse mit möglichst geringer Zeitdauer und Rechenaufwand erzeugt werden kann.

Das Abbruchkriterium kann auch erfüllt sein, wenn alternativ oder kumulativ zu der korrekten Klassifizierung eine instanzspezifische Konfidenz höher als ein vorbestimmter Schwellwert ist. Die Konfidenz kann hierbei neben dem Ausgangsdatenpunkt, insbesondere also der Klasse, eine weitere Ausgangsgröße des Klassifikationsmodells sein. Diese kann repräsentieren, wie sicher sich das Modell bezüglich seiner Klassifikationsentscheidung ist. Eine hohe Konfidenz (z. B. 0,95 oder 95 %) kann bedeuten, dass das Modell im Vergleich zu niedrigeren Konfidenzen stärker davon überzeugt ist, dass der Eingangsdatenpunkt der bestimmten Klasse angehört. Auch hierdurch kann in vorteilhafter Weise erreicht werden, dass ein aussagekräftiger synthetischer Datenpunkt für eine bestimmte Ziel-Klasse mit möglichst geringer Zeitdauer und Rechenaufwand erzeugt werden kann.

So ist es möglich, dass die vom generativen Modell in der Inferenzphase erzeugten Datenpunkt-Instanzen in verschiedenen Schritten der Inferenzphase vom generativen Modell durch das Klassifikationsmodell zuerst als Rausch-Datenpunkte, also Elemente der Rauschklasse, identifiziert werden, wobei die Konfidenz mit Anzahl der Schritte abnimmt. Die in einem Wechsel-Schritt erzeugte Datenpunkt-Instanz kann als Element einer von der Rauschklasse verschiedenen Ziel-Klasse klassifiziert werden. Nachfolgend kann die Konfidenz in den Folgeschritten zunehmen.

Weiter vorgeschlagen wird ein Verfahren zur Klassifizierung eines Eingangsdatenpunkts, wobei zumindest ein synthetischer Datenpunkt mit einem Verfahren zur Erzeugung eines synthetischen Datenpunkts gemäß einer der in dieser Offenbarung beschriebenen Ausführungsformen erzeugt wird, wobei die Klassifizierung in Abhängigkeit des zumindest einen synthetischen Datenpunkts erfolgt. Die Klassifizierung kann hierbei in einem Klassifizierungsschritt durchgeführt werden.

Der Eingangsdatenpunkt kann erzeugt und eingelesen werden. Insbesondere kann der Eingangsdatenpunkt sensorisch, also mit einer Erfassungseinrichtung, erfasst werden. Dieser Eingangsdatenpunkt wird einer Klasse aus einer Menge vorbestimmter Ziel-Klassen zugeordnet. Dies erfolgt in Abhängigkeit mindestens eines synthetischen Datenpunkts, der mit dem generativen Modell erzeugt wurde.

In einer einfachen Ausführungsform kann z.B. der Eingangsdatenpunkt einer von zwei Ziel-Klassen zugeordnet werden. Hierzu kann durch das generative Modell zumindest für eine der Ziel-Klassen genau ein oder mehrere zielklassenspezifische(r) synthetische Datenpunkt(e) erzeugt werden. Dann kann der Eingangsdatenpunkt mit diesem zielklassenspezifischen synthetischen Datenpunkt oder einem in Abhängigkeit von mehreren zielklassenspezifischen synthetischen Datenpunkten erzeugten Referenzdatenpunkt verglichen werden. Der Referenzdatenpunkt kann beispielweise ein Mittelwert aller zielklassenspezifischen synthetischen Datenpunkte sein. Ist eine Ähnlichkeit zwischen dem Eingangsdatenpunkt und dem zielklassenspezifischen synthetischen Datenpunkt/Referenzdatenpunkt größer als ein vorbestimmtes oder gleich einem vorbestimmten Maß, so kann dem Eingangsdatenpunkt als Klassifikationsergebnis die Ziel-Klasse zugeordnet werden, für die der zielklassenspezifische synthetische Datenpunkt erzeugt wurde. Ist die Ähnlichkeit kleiner als das vorbestimmte Maß, so kann dem Eingangsdatenpunkt als Klassifikationsergebnis die verbleibende Ziel-Klasse zugeordnet werden.

Es ist natürlich auch möglich, dass mit dem Verfahren zur Erzeugung für jede der Ziel-Klassen ein, vorzugsweise jedoch mehrere, zielklassenspezifische synthetische Datenpunkte bestimmt werden. Auch können - wie vorhergehend erläutert - für jede Ziel-Klasse entsprechende Referenzdatenpunkte erzeugt werden. Dann kann für jede Ziel-Klasse eine Ähnlichkeit zu dem zielklassenspezifischen synthetischen Datenpunkt bzw. dem klassenspezifischen Referenzdatenpunkt bestimmt werden, wobei dem Eingangsdatenpunkt als Klassifikationsergebnis die Ziel-Klasse zugeordnet wird, für die die Ähnlichkeit maximal ist oder ein anderes vorbestimmtes Kriterium erfüllt.

Auch ist es vorstellbar, dass für jede Ziel-Klasse zielklassenspezifische synthetische Datenpunkte, die auch als prototypische Instanzen der Ziel-Klasse bezeichnet werden können, erzeugt werden. Weiter können die zielklassenspezifischen synthetischen Datenpunkte einer zielklassenspezifischen Menge von ähnlichen Datenpunkten zugeordnet werden, wenn sie ein vorbestimmtes Ähnlichkeitskriterium erfüllen. Mit anderen Worten kann ein so genanntes Clustering der zielklassenspezifischen Datenpunkte einer Ziel-Klasse durchgeführt werden, also ein Verfahren zur Detektion von ähnlichen Datenpunkten und Zuordnung dieser ähnlichen Datenpunkte zu einer Menge. Dann kann für jede Menge jeder Ziel-Klasse eine Ähnlichkeit zwischen dem Eingangsdatenpunkt und einem mengenspezifischen Referenzdatenpunkt, z.B. einem Mittelwert aller Datenpunkte dieser Menge, bestimmt werden, wobei dem Eingangsdatenpunkt als Klassifikationsergebnis die Ziel-Klasse der Menge zugeordnet wird, für die die Ähnlichkeit maximal ist oder ein anderes vorbestimmtes Kriterium erfüllt. Durch das Clustering kann das Klassifikationsergebnis in vorteilhafter Weise weiter verbessert werden.

Durch die Verwendung des synthetischen Datenpunkts, der mit einem Verfahren zur Erzeugung eines synthetischen Datenpunkts erzeugt wurde, ergibt sich jedoch in vorteilhafter Weise eine möglichst korrekte Klassifizierung, die in robuster, effizienter und in nachvollziehbarer Weise ausgeführt werden kann. Dies beruht insbesondere auf der Tatsache, dass der synthetische Ausgangsdatenpunkt die Eigenschaft einer guten Klassifizierbarkeit sowie einer starken Zugehörigkeit zu einer Ziel-Klasse aufweist.

Da die erläuterten Prototypen die Essenz aller klassifikationsrelevanten Merkmale verkörpern, sind sie leicht zu interpretieren, und es kann gleichzeitig eine hohe Klassifikationsgenauigkeit erreicht werden. Darüber hinaus ist die erläuterte Klassifikation robust gegenüber Rauschen, insbesondere dem Rauschen, dass ähnlich zu dem vom generativen Modell bei der Erzeugung des synthetischen Datenpunkts benutzten Rauschen ist. Wichtig ist insbesondere auch die Tatsache, dass die Prototypen aufgrund ihrer durch die Erzeugung bedingten Eigenschaften Artefakte aufweisen können, die durch die Art ihrer Erstellung bedingt sind. Daher kann zusätzliches Rauschen bis zu einem gewissen Grad toleriert werden.

Die vorgeschlagene Klassifizierung kann in einer Vielzahl von Anwendungen eingesetzt werden, insbesondere zur Klassifizierung von Abbildern, die von mindestens einer Bilderfassungseinrichtung erzeugt wurden. Spezifische Beispiele umfassen Anwendungen im Gesundheitswesen. So kann z.B. eine Klassifizierung von Tumoren in insbesondere verrauschten Bildern erfolgen, wobei die Bilder z.B. CT-, MRT-, Röntgen- oder Ultraschallbilder sind. Die Ergebnisse sind für einen Arzt insbesondere gut interpretierbar. Eine beispielhafte fahrzeugtechnische Anwendung ist eine Klassifizierung von gefährdeten Verkehrsteilnehmern, wie z.B. Fußgänger bei schlechten Lichtverhältnissen, in Abbildern, die von einer Fahrzeugkamera erzeugt wurden. Auch in diesem Zusammenhang ergibt sich eine verbesserte Interpretierbarkeit für Plausibilitätsprüfungen oder menschliche Beobachter in halbautomatischen Systemen. In fertigungstechnischen Anwendungen können z.B. fehlerhaften Teile klassifiziert werden, die insbesondere in einer Fertigungslinie produziert werden und wobei Abbilder insbesondere nur unter schwierigen Bedingungen erzeugt werden können, z.B. von einer Kamera. Auch in diesem Fall ergibt sich eine gute Interpretierbarkeit der Ergebnisse für einen Qualitätsinspektor.

In einer weiteren Ausführungsform wird in Abhängigkeit des zumindest einen synthetischen Datenpunkts ein Ersatz-Klassifikationsmodell erzeugt, das zur Klassifizierung des Eingangsdatenpunkts verwendet wird. Durch die Nutzung des Ersatz-Klassifikationsmodells kann insbesondere die vorhergehend erläuterte Klassifizierung durchgeführt werden.

Das Ersatz-Klassifikationsmodell kann aber auch ein durch maschinelles Lernen erzeugtes Modell sein. Insbesondere kann mit dem Verfahren zur Erzeugung von synthetischen Datenpunkten ein Teil eines Trainingsdatensatzes oder ein vollständiger Trainingsdatensatz erzeugt werden, der zum Trainieren des Ersatz-Klassifikationsmodells verwendet wird. Hierbei kann der synthetische Datenpunkt einen Trainings-Eingangsdatenpunkt und die für die Erzeugung des synthetischen Datenpunkts vorgegebene Ziel-Klasse ein Trainings-Ausgangsdatenpunkt des Trainingsdatensatzes bilden. Bezüglich der Ausbildung und des Trainings des Ersatz-Klassifikationsmodells kann auf die vorhergehenden Ausführungen in Bezug auf das Klassifikationsmodell verwiesen werden. Im Vergleich zu dem Klassifikationsmodell kann das Ersatz-Klassifikationsmodell in einer mit weniger Rechenaufwand und/oder Speicheraufwand bei der Ausführung und/oder Bereitstellung Art und Weise implementiert sein.

Simulationen und Tests haben gezeigt, dass die beschriebene Klassifizierung in Abhängigkeit des zumindest einen synthetischen Datenpunkts, insbesondere also die Klassifizierung mit einem Ersatz-Klassifikationsmodell, im Vergleich zur Klassifizierung mit dem Klassifikationsmodell insbesondere für stärker verrauschte Eingangsdatenpunkte eine bessere Klassifizierungsgenauigkeit ermöglicht.

In einer weiteren Ausführungsform wird eine Mehrzahl von synthetischen Datenpunkten erzeugt, wobei die Klassifikation abhängig von einem Ähnlichkeitsmaß zwischen den synthetischen Datenpunkten und dem Eingangsdatenpunkt erfolgt. Dies und entsprechende technische Vorteile wurden vorhergehend bereits erläutert.

Weiter vorgeschlagen wird ein System zur Erzeugung von mindestens einem synthetischen Datenpunkt, umfassend eine Schnittstelle zur Ausgabe des mindestens einen synthetischen Datenpunkts sowie mindestens eine Recheneinrichtung zum Ausführen eines maschinell erlernten generativen Modells, wobei das System konfiguriert ist, ein Verfahren zur Erzeugung von mindestens einem synthetischen Datenpunkt gemäß einer der in dieser Offenbarung beschriebenen Ausführungsformen durchzuführen. Hierdurch ergibt sich in vorteilhafter Weise ein System, das ein Verfahren mit den vorhergehend erläuterten technischen Vorteilen ausführen kann. Mit dem System, insbesondere mit der erläuterten Recheneinrichtung, kann also der Erzeugungsschritt durchgeführt werden.

Das System kann auch eine Schnittstelle zum Einlesen eines Generierungs-Trainingsdatensatz umfassen. Die Recheneinrichtung kann auch zum Trainieren des generativen Modells und somit zur Durchführung des Trainingsschritts ausgebildet sein. Auch kann ein Einleseschritt zum Einlesen des Generierungs-Trainingsdatensatzes durchgeführt werden.

Die mindestens eine Recheneinrichtung kann als Mikrocontroller oder integrierte Schaltung ausgebildet sein oder mindestens eine(n) solche(n) umfassen. Insbesondere kann das System eine Trainingskomponente zum Training des generativen Modells und eine Ausführungskomponente (Inferenzkomponente) für das generative Modell umfassen. Eine solche Komponente kann zumindest teilweise durch die Recheneinrichtung bereitgestellt sein.

Das System kann eine Schnittstelle zum Einlesen von weiteren Informationen für das Training oder die Ausführung des generativen Modells und/oder des Klassifikationsmodells umfassen, insbesondere einer der vorhergehend erläuterten Eingangsgrößen wie z.B. eine Ziel-Klasse. Eine solche Schnittstelle kann insbesondere eine Benutzerschnittstelle sein und insbesondere als Mensch-Maschinen-Schnittstelle ausgebildet sein. Eine solche Schnittstelle kann auch für die vorhergehend erläuterte Annotation genutzt werden.

Wie vorhergehend erläutert kann die mindestens eine Recheneinrichtung auch zum Trainieren und Ausführen des Klassifikationsmodells dienen. Insbesondere kann das System dann auch eine Trainingskomponente zum Trainieren des Klassifikationsmodells und eine Ausführungskomponente zur Ausführung des Klassifikationsmodells umfassen.

Das System kann außerdem mindestens eine Speichereinrichtung zur Speicherung von Datenpunkten und/oder einer Repräsentation des generativen Modells und/oder einer Repräsentation des Klassifikationsmodells umfassen. Die Schnittstelle zum Einlesen des Generierungs-Trainingsdatensatzes kann auch zum Einlesen des Klassifikations-Trainingsdatensatzes dienen.

Datenpunkte, insbesondere Eingangsdatenpunkte und Trainings-Eingangsdatenpunkte, können sensorisch, also mit einer Erfassungseinrichtung, erfasste Datenpunkte sein. In diesem Fall kann das System eine entsprechende Erfassungseinrichtung wie z.B. eine Bilderfassungseinrichtung umfassen.

Weiter vorgeschlagen wird ein System zur Klassifizierung eines Eingangsdatenpunkts, wobei das System mindestens eine Schnittstelle zum Einlesen des Eingangsdatenpunkts, mindestens eine Schnittstelle zum Einlesen mindestens eines synthetischen Datenpunkts und eine Recheneinrichtung und mindestens eine Schnittstelle zur Ausgabe eines Klassifikationsergebnis umfasst, wobei das System konfiguriert ist, ein Verfahren zur Klassifizierung eines Eingangsdatenpunkts gemäß einer der in dieser Offenbarung beschriebenen Ausführungsformen durchzuführen. Hierdurch ergibt sich in vorteilhafter Weise ein System, das ein Verfahren mit den vorhergehend erläuterten technischen Vorteilen ausführen kann. Die Recheneinrichtung kann wie vorhergehend erläutert ausgebildet sein. Insbesondere kann das System zur Klassifizierung eine Klassifizierungskomponente zur Durchführung der Klassifizierung umfassen.

Der synthetische Datenpunkt kann insbesondere aus einer Speichereinrichtung eingelesen werden, wobei er vor dem Einlesen durch das System zur Erzeugung in dieser Speichereinrichtung gespeichert wurde.

Der Eingangsdatenpunkt kann insbesondere ein sensorisch erfasster Eingangsdatenpunkt sein und das System kann eine entsprechende Erfassungseinrichtung wie z.B. eine Bilderfassungseinrichtung umfassen. Selbstverständlich kann das System zur Klassifizierung wie auch das System zur Erzeugung noch weitere Erfassungseinrichtungen zur Erfassung von Datenpunkten umfassen.

Das System zur Klassifizierung kann auch eine Ausgabeeinrichtung zur Ausgabe des Klassifikationsergebnisses umfassen, die z.B. als Anzeigeeinrichtung ausgebildet oder eine solche umfassen kann. Selbstverständlich kann die Ausgabeeinrichtung auch in anderer Weise, z.B. als akustische Ausgabeeinrichtung, ausgebildet sein.

Das System zur Klassifizierung kann auch mindestens eine Speichereinrichtung zur Speicherung von Datenpunkten umfassen.

Das System zur Klassifizierung kann Bestandteil eines übergeordneten Systems sein, z.B. eines Systems zur Qualitätsprüfung, eines Systems zur Sortierung einer Postsendung oder zur Bestimmung einer Diagnose sein. Diese Systeme können zusätzlich mindestens eine steuerbare Einrichtung umfassen, wobei in Abhängigkeit des Klassifikationsergebnisses ein Steuersignal für diese steuerbare Einrichtung erzeugt wird. Insbesondere kann somit eine automatisierte Steuerung der mindestens einen steuerbaren Einrichtung erfolgen. Das System zur Klassifizierung oder das übergeordnete System können das System zur Erzeugung umfassen.

Weiter vorgeschlagen wird ein Computerprogrammprodukt mit einem Computerprogramm, wobei das Computerprogramm Softwaremittel zur Ausführung ausgewählter oder aller Schritte des Verfahrens zur Erzeugung von mindestens einem synthetischen Datenpunkt, insbesondere des Trainingsschritts und des Erzeugungsschritts, oder des Verfahrens zur Klassifizierung eines Eingangsdatenpunkts, insbesondere des Klassifizierungsschritts, umfasst, wenn das Computerprogramm von oder in einem Computer oder einem Automatisierungssystem ausgeführt wird.

Ferner wird ein Programm beschrieben, das, wenn es auf einem Computer oder in einem Automatisierungssystem abläuft, den Computer oder das Automatisierungssystem veranlasst, wie vorhergehend erläutert ausgewählte oder alle Schritte dieses/dieser Verfahren(s) durchzuführen, und/oder ein Programmspeichermedium, auf dem das Programm gespeichert ist (insbesondere in einer nicht-transitorischen Form), und/oder ein Computer, der das Programmspeichermedium umfasst, und/oder eine (physikalische, z.B. elektrische, z.B. technisch erzeugte) Signalwelle, z.B. eine digitale Signalwelle, die Informationen trägt, die das Programm, z.B. das vorgenannte Programm, darstellen, das z.B.

Codemittel umfasst, die geeignet sind, die erläuterten Verfahrensschritte durchzuführen. Dies bedeutet, dass das erfindungsgemäße Verfahren z.B. ein computerimplementiertes Verfahren ist. Beispielsweise können alle Schritte oder nur einige der Schritte (d.h. weniger als die Gesamtzahl der Schritte) des erfindungsgemäßen Verfahrens von einem Computer ausgeführt werden. Eine Ausführungsform des computerimplementierten Verfahrens ist eine Verwendung des Computers zur Durchführung eines Datenverarbeitungsverfahrens. Der Computer umfasst z.B. mindestens einen Mikrocontroller oder Prozessor und z.B. mindestens einen Speicher, um die Daten (technisch) zu verarbeiten, z.B. elektronisch und/oder optisch. Der Prozessor besteht beispielsweise aus einer Substanz oder Zusammensetzung, die ein Halbleiter ist, beispielsweise zumindest teilweise n- und/oder p-dotierter Halbleiter, beispielsweise mindestens ein II-, III-, IV-, V-, VI-Halbleitermaterial, beispielsweise (dotiertes) Silizium und/oder Galliumarsenid. Ein Computer ist z.B. jede Art von Datenverarbeitungsgerät, z.B. elektronisches Datenverarbeitungsgerät. Ein Computer kann ein Gerät sein, das allgemein als solches angesehen wird, z.B. Desktop-PCs, Notebooks, Netbooks usw., kann aber auch ein beliebiges programmierbares Gerät sein, wie z.B. ein Mobiltelefon oder ein eingebetteter Prozessor. Ein Computer kann beispielsweise aus einem System (Netzwerk) von "Sub-Computern" bestehen, wobei jeder Sub-Computer einen eigenständigen Computer darstellt.

Das Computerprogrammprodukt ermöglicht in vorteilhafter Weise die Durchführung eines erläuterten Verfahrens gemäß einer der in dieser Offenbarung beschriebenen Ausführungsformen, für die zuvor technische Vorteile beschrieben worden sind.

Die Erfindung wird anhand von Ausführungsbeispielen näher erläutert. Die Figuren zeigen:

Fig. 1    ein schematisches Flussdiagramm eines erfindungsgemäßen Verfahrens zur Erzeugung eines synthetischen Datenpunkts (A1),

Fig. 2    ein schematisches Flussdiagramm eines erfindungsgemäßen Verfahrens zur Erzeugung eines synthetischen Datenpunkts in einer weiteren Ausführungsform (A4),

Fig. 3    ein schematisches Flussdiagramm eines erfindungsgemäßen Verfahrens zur Erzeugung eines synthetischen Datenpunkts in einer weiteren Ausführungsform (A8),

Fig. 4    ein schematisches Flussdiagramm eines erfindungsgemäßen Verfahrens zur Klassifizierung (A10),

Fig. 5    ein schematisches Blockschaltbild eines erfindungsgemäßen Systems zur Erzeugung eines synthetischen Datenpunkts und

Fig. 6    ein schematisches Blockschaltbild eines erfindungsgemäßen Systems zur Klassifizierung.

Nachfolgend bezeichnen gleiche Bezugszeichen Elemente mit gleichen oder ähnlichen technischen Merkmalen.

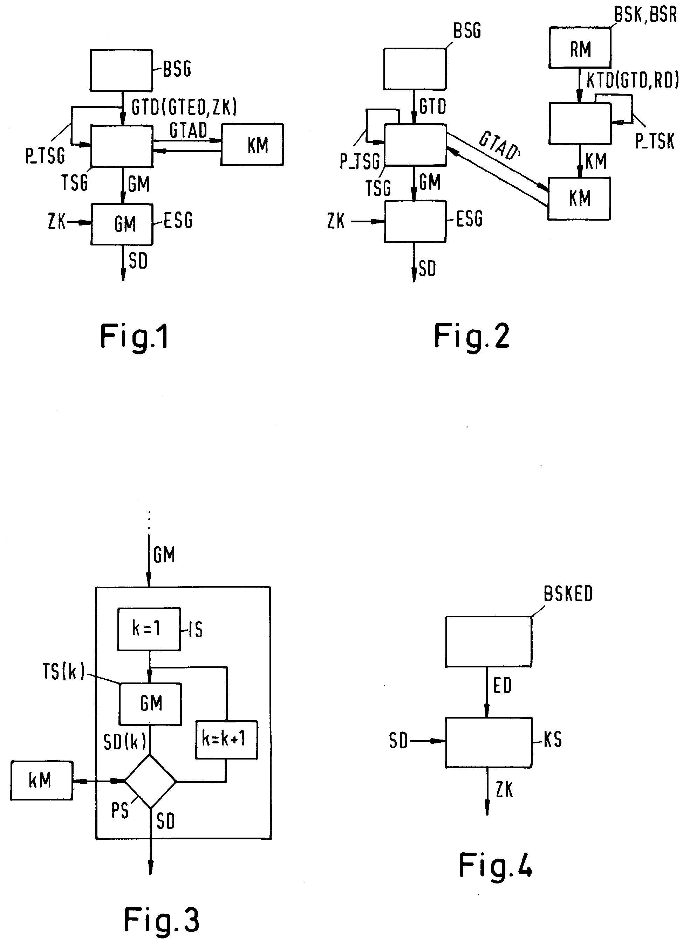

Fig. 1 zeigt ein schematisches Flussdiagramm eines erfindungsgemäßen Verfahrens zur Erzeugung eines synthetischen Datenpunkts SD. In einem Bereitstellungsschritt BSG, der nicht zwingend Teil des Verfahrens sein muss, wird ein Generierungs-Trainingsdatensatz GTD bereitgestellt. Dieser kann z.B. aus einer Speichereinrichtung abgerufen werden. Der Generierungs-Trainingsdatensatz GTD kann Trainings-Eingangsdatenpunkte GTED umfassen, bevorzugt in Form von Bilddaten, die z.B. zwei- oder dreidimensionale Bilder repräsentieren können. Weiter kann der Datensatz auch Informationen zu Ziel-Klassen ZK enthalten, die einem jeweiligen Trainings-Eingangsdatenpunkt GTED zugeordnet sind. Die Trainings-Eingangsdatenpunkte GTED können sensorisch erfasst worden sein, wobei die Informationen zu den Ziel-Klassen ZK dem jeweiligen Trainings-Eingangsdatenpunkt GTED durch eine nutzergestützte Annotation, z.B. mittels einer Benutzerschnittstelle, zugeordnet wurden.

In einem Trainingsschritt TSG wird ein maschinell erlerntes generatives Modell GM unter Verwendung des Generierungs-Trainingsdatensatzes GTD trainiert. Dieses Training erfolgt insbesondere iterativ und ist symbolisch durch einen Pfeil P_TSG dargestellt. Das Training ist insbesondere ein zielklassenspezifisches Training und erfolgt derart, dass das generative Modell GM bei Vorgabe einer Ziel-Klasse einen zielklassenspezifischen synthetischen Datenpunkt SD erzeugt.

Im Training wird Verlustfunktion verwendet, wobei ein Ausgangswert der Verlustfunktion während des Trainings iterativ minimiert wird. Der Ausgangswert der Verlustfunktion wird basierend auf mindestens zwei Argumenten bestimmt. Ein erstes Argument repräsentiert eine Unähnlichkeit zwischen dem jeweiligen Trainings-Eingangsdatenpunkt GTED und dem von dem generativen Modell während des Trainings erzeugten Trainings-Ausgangsdatenpunkt GTAD.

Ein weiteres Argument repräsentiert eine Klassifizierbarkeit des erzeugten Trainings-Ausgangsdatenpunkts GTAD durch ein maschinell erlerntes Klassifikationsmodell KM.

Zur Berechnung des Ausgangswerts können diese Argumente fusioniert werden, z.B. mittels einer Linearkombination, insbesondere einer Summation. Bei dieser Fusionierung können die beiden Argumente verschieden gewichtet werden.

So kann z.B. der Ausgangswert der Verlustfunktion wie folgt bestimmt werden

$$\mathcal{L} = \mathcal{L}_{gen} + \alpha \mathcal{L}_{class} \qquad\qquad\qquad \text{Formel 1,}$$

wobei $\mathcal{L}$ der Ausgangswert der Verlustfunktion, $\mathcal{L}_{gen}$ das die Unähnlichkeit repräsentierende erste Argument, $\mathcal{L}_{class}$ das die Klassifizierbarkeit repräsentierende weitere Argument ist und $\alpha$ ein vorbestimmter Gewichtungsfaktor ist.

Rein beispielhaft kann das erste Argument als $\mathcal{L}_{gen} = N_{pred} - N_{orig}$ bestimmt werden, wobei $N_{pred}$ einen vom generativen Modell erzeugten synthetischen Datenpunkt und $N_{orig}$ einen Trainings-Eingangsdatenpunkt GTED bezeichnet. Für einen Generierungs-Trainingsdatensatz mit n Datenpunkten kann das erste Argument auch als $\mathcal{L}_{gen} = \frac{1}{n}\sum_{i=1}^{n}\left(N_{pred,i} - N_{orig,i}\right)$ bestimmt werden. Ebenfalls rein beispielhaft kann das weitere Argument als 0 bestimmt werden, wenn die Klassifizierung durch das Klassifikationsmodell KM korrekt war, also die durch das Klassifikationsmodell KM bestimmte Ziel-Klasse der für die Erzeugung mit dem generativen Modell GM vorgegebenen Ziel-Klasse entspricht. Andernfalls kann das weitere Argument als 1 bestimmt werden. Für einen Generierungs-Trainingsdatensatz mit n Datenpunkten kann das weitere Argument auch als Mittelwert der Summe der datenpunktspezifischen Ausgangswerte bestimmt werden.

Nach dem Trainingsschritt TSG wird mit dem derart bereitgestellten generativen Modell GM der synthetische Datenpunkt SD erzeugt. Dies kann in einem Erzeugungsschritt ESG erfolgen. Dabei kann dem generativen Modell GM als Eingangsgröße zumindest eine Ziel-Klasse ZK vorgeben werden. Der synthetische Datenpunkt SD wird dann derart erzeugt, dass er klassenspezifische Eigenschaften aufweist. Somit ähnelt der den zielklassenspezifischen Trainings-Eingangsdatenpunkten GTED und weist eine gute Klassifizierbarkeit durch das Klassifikationsmodell KM auf.

Bevorzugt ist das generative Modell GM als Diffusionsmodell ausgebildet. Dessen Training umfasst eine Diffusionsphase und eine Umkehrphase. Im Erzeugungsschritt ESG wird dann ein Seed-Datenpunkt erzeugt bzw. bereitgestellt und dann die trainierte Umkehrphase ausgeführt. Neben der Ziel-Klasse ZK kann der Seed-Datenpunkt eine weitere Eingangsgröße für die Erzeugung sein. Wird das Klassifikationsmodell KM - wie in Bezug auf Fig. 2 erläutert - unter anderem mit Rauschdatenpunkten RD trainiert, die gemäß einem vorbestimmten Rauschmodell RM erzeugt wurden, so kann der Seed-Datenpunkt ebenfalls gemäß dieses Rauschmodells RM erzeugt werden.

Vorzugsweise wird der derart erzeugte synthetische Datenpunkt SD und die für dessen Erzeugung vorgegebene Ziel-Klasse ZK gespeichert, insbesondere in einer Speichereinrichtung. Weiter vorzugweise wird auf diese Weise eine Mehrzahl von synthetischen Datenpunkten SD erzeugt, insbesondere für jede Ziel-Klasse ZK einer Menge vorbestimmter Ziel-Klassen. Der/die derart erzeugte(n) synthetischen Datenpunkte SD und die ihm/ihnen zugeordnete Ziel-Klasse ZK dienen zur Erzeugung eines Ersatz-Klassifikators EK, was nachfolgend noch näher erläutert wird.

Fig. 2 zeigt ein schematisches Flussdiagramm eines erfindungsgemäßen Verfahrens zur Erzeugung eines synthetischen Datenpunkts SD in einer weiteren Ausführungsform. Im Unterschied zu der in Fig. 1 dargestellten Ausführungsform umfasst das Verfahren zusätzlich noch ein Training des Klassifikationsmodells KM. Dieses wird mit einem Klassifikations-Trainingsdatensatz KTD trainiert, wobei dieser Klassifikations-Trainingsdatensatz KTD zumindest einen Teil des Generierungs-Trainingsdatensatzes GTD umfasst. Dieser kann in einem Bereitstellungsschritt BSK bereitgestellt werden. Dieses Training erfolgt ebenfalls iterativ und ist symbolisch durch einen Pfeil P_TSK dargestellt

Insbesondere können alle oder ausgewählte Trainings-Eingangsdatenpunkte GTED des Generierungs-Trainingsdatensatzes GTD Trainings-Eingangsdatenpunkte KTED des Klassifikations-Trainingsdatensatzes KTD bilden. Die den jeweiligen Trainings-Eingangsdatenpunkten GTED des Generierungs-Trainingsdatensatzes GTD zugeordneten Ziel-Klassen ZK können dann Trainings-Ausgangsdatenpunkte des Klassifikations-Trainingsdatensatzes KTD bilden.

Vorzugsweise, aber nicht zwingend, umfasst der Klassifikations-Trainingsdatensatz KTD als weitere Trainings-Eingangsdatenpunkte Rauschdatenpunkte RD, die gemäß eines vorbestimmten Rauschmodells RM erzeugt wurden, sowie eine diesen Rauschdatenpunkten RD zugeordnete Rauschklasse als Trainings-Ausgangsdatenpunkt. Sind die Trainings-Eingangsdatenpunkte des Generierungs-Trainingsdatensatzes GTD z.B. Bilder, so können diese Rauschdatenpunkte RD in Form von Rauschbildern bereitgestellt werden. Die Bereitstellung dieser Rauschdatenpunkte RD kann in einem Rauschdaten-Bereitstellungsschritt BSR erfolgen, insbesondere unter Nutzung des vorbestimmten Rauschmodells RM.

Es ist weiter möglich, dass der Klassifikations-Trainingsdatensatz KTD zusätzlich noch weitere Trainings-Eingangsdatenpunkte und Trainings-Ausgangsdatenpunkte umfasst. Die Trainings-Eingangsdatenpunkte können sensorisch erfasst worden sein, wobei die Informationen zu den Ziel-Klassen ZK dem jeweiligen Trainings-Eingangsdatenpunkt durch eine nutzergestützte Annotation, z.B. mittels einer Benutzerschnittstelle, als Trainings-Ausgangsdatenpunkte zugeordnet wurden.

Fig. 3 zeigt ein schematisches Flussdiagramm eines erfindungsgemäßen Verfahrens zur Erzeugung eines synthetischen Datenpunkts SD in einer weiteren Ausführungsform. Hierbei erfolgt die Erzeugung des synthetischen Datenpunkts SD in dem Erzeugungsschritt ESG in verschiedenen Teilschritten TS(k), die sequentiell nacheinander ausgeführt werden. In jedem Teilschritt TS(k) wird dann eine schrittspezifische Instanz SD(k) des synthetischen Datenpunkts SD erzeugt, wobei k eine Schrittzählervariable ist, die in einem Initialisierungsschritt IS initialisiert werden kann, z.B. mit dem Wert 1. Diese Teilschritte TS(k) können insbesondere Schritte einer Umkehrphase bei Nutzung eines Diffusionsmodells bei der Erzeugung der synthetischen Datenpunkte SD sein. Nach dem jeweiligen Teilschritt TS(k) wird in einem Prüfschritt PS geprüft, ob die schrittspezifische Instanz SD(k) ein Abbruchkriterium erfüllt. Ist dies der Fall oder ist eine vorbestimmte maximale Anzahl von Schritten k_max erreicht, so bildet die schrittspezifische Instanz SD(k) den zu erzeugenden synthetischen Datenpunkt DP. Andernfalls wird in einem weiteren Teilschritt TS(k+1) eine weitere schrittspezifische Instanz SD(k+1) erzeugt. Das Abbruchkriterium kann erfüllt sein, wenn der schrittspezifischen Instanz SD(k) mit dem Klassifikationsmodell KM als Ziel-Klasse ZK die Klasse zugeordnet wird, die als Eingangsgröße vorgegeben wurde, insbesondere mit mindestens einer vorbestimmten Konfidenz.

Fig. 4 zeigt ein schematisches Flussdiagramm eines erfindungsgemäßen Verfahrens zur Klassifizierung. In einem Bereitstellungsschritt BSKED wird ein zu klassifizierender Eingangsdatenpunkt ED bereitgestellt. Dieser kann z.B. sensorisch erfasst werden. Ziel der Klassifizierung ist es, diesem Eingangsdatenpunkt ED eine Ziel-Klasse ZK einer Menge vorbestimmter Ziel-Klassen zuzuordnen. Ebenfalls wird mindestens ein, vorzugsweise jedoch eine Mehrzahl von, synthetischer/n Datenpunkt(en) SD für die Klassifizierung bereitgestellt, die z.B. mit einem Verfahren gemäß der in Fig. 1, Fig. 2 oder Fig. 3 dargestellten Ausführungsformen erzeugt wurden. Diese können z.B. aus einer Speichereinrichtung abgerufen werden. Diesen synthetischen Datenpunkten SD können jeweils Informationen zu den jeweiligen Ziel-Klassen ZK zugeordnet sein, die für ihre Erzeugung als Eingangsgröße vorgegeben wurden. Die Ziel-Klassen ZK für die Zuordnung durch die Klassifizierung können hierbei den Ziel-Klassen ZK für die Generierung von synthetischen Datenpunkten SD entsprechen. Insbesondere kann für mindestens eine Ziel-Klasse ZK, vorzugsweise jedoch für jede Ziel-Klasse ZK der Menge vorbestimmter Ziel-Klassen, mindestens ein, vorzugsweise eine Mehrzahl von, synthetischer/n Datenpunkt(en) erzeugt worden sein, wobei dann die Klassifizierung in Abhängigkeit des mindestens einen synthetischen Datenpunkts SD erfolgt. Die Bereitstellung des mindestens einen synthetischen Datenpunkts SD kann hierbei einmalig erfolgen, wobei dann auf Grundlage dieses einmalig bereitgestellten Datenpunkts mehrere Eingangsdatenpunkte KED, insbesondere zeitlich nacheinander, klassifiziert werden können.

In einem Klassifizierungsschritt KS wird dann die Klassifizierung durchgeführt. Beispielhafte Ausführungsformen für diese Klassifizierung wurden vorhergehend bereits erläutert. So ist es insbesondere möglich, dass auf Grundlage des mindestens einen erzeugten synthetischen Datenpunkts SD ein Ersatz-Klassifikationsmodell erzeugt und zur Klassifizierung verwendet wird. Dieses Ersatz-Klassifikationsmodell kann ein maschinell erlerntes Modell sein. Dies ist jedoch nicht zwingend. Beispielhafte Ersatz-Klassifikationsmodelle wurden vorhergehend bereits erläutert.

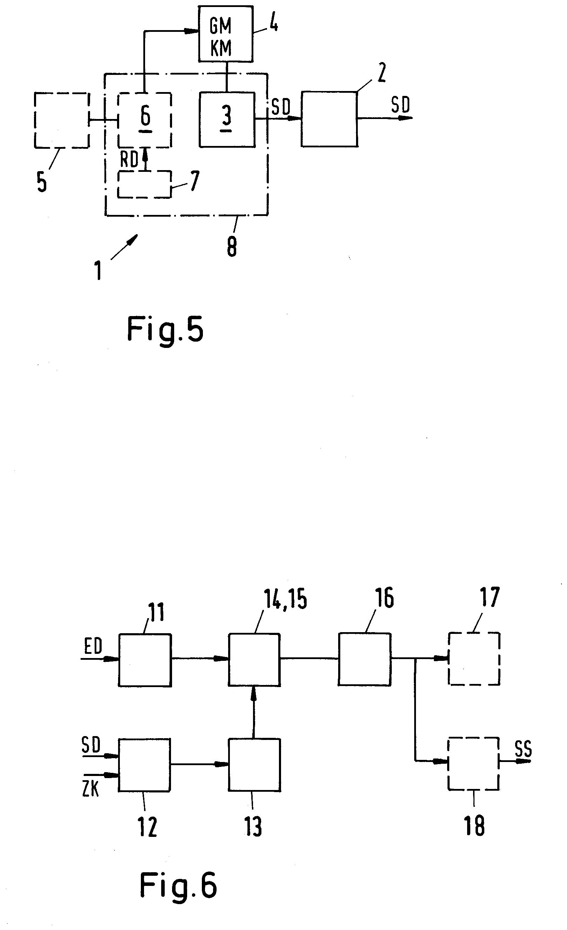

Fig. 5 zeigt ein schematisches Blockschaltbild eines erfindungsgemäßen Systems 1 zur Erzeugung eines synthetischen Datenpunkts SD. Das System 1 umfasst eine Schnittstelle 2 zur Ausgabe des mindestens einen synthetischen Datenpunkts SD. Weiter umfasst das System eine Ausführungskomponente 3, die die Erzeugung des synthetischen Datenpunkts SD durch Ausführen eines maschinell erlernten generativen Modells GM ausführt. Eine datenbasierte Repräsentation des generativen Modells GM kann in einer Speichereinrichtung 4 des Systems 1 gespeichert sein.

Ebenfalls kann in der Speichereinrichtung 4 oder in einer weiteren Speichereinrichtung (nicht dargestellt) des Systems 2 ein Klassifikationsmodell KM gespeichert sein, insbesondere eine datenbasierte Repräsentation dieses Klassifikationsmodells KM. Dieses kann bei der Erzeugung des synthetischen Datenpunkts SD ausgeführt werden, insbesondere um das in Bezug auf Fig. 3 erläuterte Abbruchkriterium auszuwerten. Wird das generative Modell GM trainiert, so kann das Klassifikationsmodell KM ebenfalls ausgeführt werden. Die Ausführung des Klassifikationsmodells KM kann durch die Ausführungskomponente 3 oder eine davon verschiedene Ausführungskomponente (nicht dargestellt) erfolgen.

Optional und daher gestrichelt dargestellt kann das System 2 eine Schnittstelle 5 zum Einlesen eines Generierungs-Trainingsdatensatzes GTD sowie eine Trainingskomponente 6 umfassen. Diese Schnittstelle 5 oder eine weitere Schnittstelle (nicht dargestellt) kann zum Einlesen von Rauschdaten RD und/oder weiterer Trainingsdaten, die Teil eines Klassifikations-Trainingsdatensatzes KTD sein können, dienen. Das Training des Klassifikationsmodells KM kann durch die Trainingskomponente 6 oder eine davon verschiedene Trainingskomponente (nicht dargestellt) erfolgen.

Alternativ zum Einlesen der Rauschdaten RD kann das System 2 einen Rauschdatengenerator 7 umfassen.

Die Ausführungskomponenten 3 sowie gegebenenfalls die Trainingskomponente 6, der Rauschdatengenerator 7 und weitere Komponenten können durch eine Recheneinrichtung 8 des Systems 2 bereitgestellt werden.

Fig. 6 zeigt ein schematisches Blockschaltbild eines erfindungsgemäßen Systems 10 zur Klassifizierung eines Eingangsdatenpunkts ED. Das System 10 umfasst eine Schnittstelle 11 zum Einlesen des Eingangsdatenpunkts ED. Weiter kann das System 10 eine Schnittstelle 12 zum Einlesen von mindestens einem synthetischen Datenpunkt SD sowie einer diesem synthetischen Datenpunkt SD zugeordneten Ziel-Klasse ZK umfassen, wobei diese z.B. mit einem in Fig. 5 dargestellten System 2 erzeugt wurden. Die derart erzeugten synthetischen Datenpunkte SD und die Informationen über die Ziel-Klasse ZK können nach ihrer Erzeugung z.B. in einer Speichereinrichtung (nicht dargestellt) gespeichert und dann zum Einlesen aus dieser abgerufen werden. Auch kann das System 10 eine Speichereinrichtung 13 zum Speichern von eingelesenen synthetischen Datenpunkten SD und den ihnen zugeordneten Ziel-Klassen umfassen.

Weiter kann das System 10 eine Klassifikationskomponente 14 zur Klassifizierung des Eingangsdatenpunkts ED umfassen. Diese Klassifikationskomponente 14 kann von einer Recheneinrichtung 15 des Systems 10 bereitgestellt sein. Weiter umfasst das System 10 eine Schnittstelle 16 zur Ausgabe eines Klassifikationsergebnisses, insbesondere einer Ziel-Klasse aus einer Menge vorbestimmter Ziel-Klassen ZK, die dem Eingangsdatenpunkt ED als Klassifikationsergebnis durch die Klassifizierung zugeordnet wurde.

Das System 10 kann weiter eine Bereitstellungskomponente zur Bereitstellung eines Ersatz-Klassifikationsmodells umfassen (nicht dargestellt), wobei die Bereitstellungskomponente ebenfalls durch die Recheneinrichtung 15 oder eine weitere Recheneinrichtung (nicht dargestellt) des Systems 10 bereitgestellt sein kann. Diese Bereitstellungskomponente kann eine Trainingskomponente sein, insbesondere wenn das Ersatz-Klassifikationsmodell ein maschinell erlerntes Modell ist. Das Ersatz-Klassifikationsmodell kann in einer datenbasierten Repräsentation in der Speichereinrichtung 13 oder in einer weiteren Speichereinrichtung (nicht dargestellt) des Systems 10 gespeichert sein.

Das System 10 kann optional (und daher gestrichelt dargestellt) einen Sensor (nicht dargestellt) zur Erfassung des Eingangsdatenpunkts ED umfassen. Dieser kann insbesondere als Bildsensor ausgebildet sein. Weiter kann das System 10 eine Ausgabeeinrichtung 17 für das Klassifikationsergebnis umfassen. Alternativ oder kumulativ kann das System eine Steuereinrichtung 18 umfassen, die ein Steuersignal SS für eine nicht dargestellte steuerbare Komponente erzeugt.

Bezugszeichenliste

| | |
|---|---|
| 1 | System |
| 2 | Schnittstelle |
| 3 | Ausführungskomponente |
| 4 | Speichereinrichtung |
| 5 | Schnittstelle |
| 6 | Trainingskomponente |
| 7 | Rauschdatengenerator |
| 8 | Recheneinrichtung |
| 10 | System |
| 11 | Schnittstelle |
| 12 | Schnittstelle |
| 13 | Speichereinrichtung |
| 14 | Klassifikationskomponente |
| 15 | Recheneinrichtung |
| 16 | Schnittstelle |
| 17 | Ausgabeeinrichtung |
| 18 | Steuereinrichtung |
| BSG | Bereitstellungsschritt |
| BSK | Bereitstellungsschritt |
| ED | Eingangsdatenpunkt |
| ESG | Erzeugungsschritt |
| GM | generatives Modell |
| GTD | Generierungs-Trainingsdatensatz |
| GTAD | Trainings-Ausgangsdatenpunkt |
| GTED | Trainings-Eingangsdatenpunkt |
| KM | Klassifikationsmodell |
| KS | Klassifizierungsschritt |
| KTD | Klassifikations-Trainingsdatensatz |
| RD | Rauschdatenpunkt |
| BSR | Rauschdaten-Bereitstellungsschritt |
| BSKED | Bereitstellungsschritt |
| RM | Rauschmodell |

| SD | synthetischer Datenpunkt |
|---|---|
| TSG | Trainingsschritt |
| ZK | Ziel-Klasse |
| K | Zählervariable |
| PS | Prüfschritt |
| IS | Initialisierungsschritt |
| TS(k) | Teilschritt |
| P_TSG | Training |
| P_TSK | Training |

**Patentansprüche**

1. Verfahren zur Erzeugung von mindestens einem synthetischen Datenpunkt (SD) umfassend den Schritt:

   a. Erzeugen des mindestens einen synthetischen Datenpunkts (SD) mit einem maschinell erlernten generativen Modell (GM), wobei das generative Modell (GM) basierend auf einem Generierungs-Trainingsdatensatz (GTD) unter Verwendung einer Verlustfunktion trainiert ist, wobei die Verlustfunktion in Bezug auf eine Unähnlichkeit zwischen einem Trainings-Eingangsdatenpunkt (GTED) und einem mit dem generativen Modell (GM) erzeugten Ausgangsdatenpunkt eine monoton steigende Funktion ist,
   **dadurch gekennzeichnet, dass**
   die Verlustfunktion in Bezug auf eine Klassifizierbarkeit des erzeugten Ausgangsdatenpunkts durch ein maschinell erlerntes Klassifikationsmodell (KM) eine monoton fallende Funktion ist.

2. Verfahren nach Anspruch 1, **dadurch gekennzeichnet, dass** ein erstes Argument der Verlustfunktion die Unähnlichkeit und ein weiteres Argument die Klassifizierbarkeit repräsentiert.

3. Verfahren nach Anspruch 1 oder 2, **dadurch gekennzeichnet, dass** die Unähnlichkeit und die Klassifizierbarkeit bei der Auswertung der Verlustfunktion verschieden gewichtet werden.

4. Verfahren nach einem der vorangegangenen Ansprüche, **dadurch gekennzeichnet, dass** das maschinell erlernte Klassifikationsmodell (GM) mit einem Klassifikations-Trainingsdatensatz (KTD) trainiert wird, wobei der Klassifikations-Trainingsdatensatz (KTD) als Trainings-Eingangsdatenpunkte zumindest einen Teil der Trainings-Eingangsdatenpunkte (GTED) des Generierungs-Trainingsdatensatz (GTD) umfasst.

5. Verfahren nach Anspruch 4, **dadurch gekennzeichnet, dass** der Klassifikations-Trainingsdatensatz (KTD) zusätzlich noch Rausch-Eingangsdatenpunkte (RD) umfasst.

6. Verfahren nach Anspruch 5, **dadurch gekennzeichnet, dass** die Rausch-Eingangsdatenpunkte (RD) gemäß eines vorbestimmte Rauschmodells (RM) erzeugt werden.

7. Verfahren nach einem der vorangegangenen Ansprüche, **dadurch gekennzeichnet, dass** ein Eingangsdatenpunkt für einen Inferenzprozess unter Anwendung des generativen Modells (GM) ein Rausch-Eingangsdatenpunkt ist, der gemäß einem Rauschmodell (RM) erzeugt wird, welches zum Erzeugen von Rausch-Eingangsdatenpunkten (RD) für das Training des Klassifikationsmodells (KM) dient.

8. Verfahren nach einem der vorangegangenen Ansprüche, **dadurch gekennzeichnet, dass** in einem Inferenzprozess unter Anwendung des generativen Modells (GM) schrittweise verschiedene Datenpunkt-Instanzen (SD(k)) erzeugt werden, wobei nach jedem Schritt (k) geprüft wird, ob die im jeweiligen Schritt (k) erzeugte Datenpunkt-Instanz (SD(k)) ein vorbestimmtes Abbruchkriterium erfüllt, wobei der synthetische Datenpunkt (SD) als die im Schritt erzeugte Datenpunkt-Instanz (SD(k)) bestimmt wird, wenn das Abbruchkriterium erfüllt ist.

9. Verfahren nach Anspruch 8, **dadurch gekennzeichnet, dass** das Abbruchkriterium erfüllt ist, wenn die Datenpunkt-Instanz (SD(k)) mit dem Klassifikationsmodell (KM) korrekt klassifizierbar ist und/oder eine instanzspezifische Konfidenz höher als ein vorbestimmter Schwellwert ist.

10. Verfahren zur Klassifizierung eines Eingangsdatenpunkts (ED), wobei zumindest ein synthetischer Datenpunkt (DP) mit einem Verfahren gemäß einem der Ansprüche 1 bis 9 erzeugt wird, wobei die Klassifizierung in Abhängigkeit des zumindest einen synthetischen Datenpunkts (DP) erfolgt.

**11.** Verfahren nach Anspruch 10, **dadurch gekennzeichnet, dass** in Abhängigkeit des zumindest einen synthetischen Datenpunkts (DP) ein Ersatz-Klassifikationsmodell erzeugt wird, das zur Klassifizierung des Eingangsdatenpunkts (ED) verwendet wird.

**12.** Verfahren nach einem der vorangegangenen Ansprüche, **dadurch gekennzeichnet, dass** eine Mehrzahl von synthetischen Datenpunkten (SD) erzeugt wird, wobei die Klassifikation abhängig von einem Ähnlichkeitsmaß zwischen den synthetischen Datenpunkten (SD) und dem Eingangsdatenpunkt (ED) erfolgt.

**13.** System zur Erzeugung von mindestens einem synthetischen Datenpunkt (SD), umfassend eine Schnittstelle (2) zur Ausgabe des mindestens einen synthetischen Datenpunkts (SD) sowie eine Recheneinrichtung (8) zum Ausführen eines maschinell erlernten generativen Modells (GM), wobei das System (2) konfiguriert ist, ein Verfahren gemäß einem der Ansprüche 1 bis 9 durchzuführen.

**14.** System zur Klassifizierung eines Eingangsdatenpunkts (ED), wobei das System (10) mindestens eine Schnittstelle (11) zum Einlesen des Eingangsdatenpunkts (ED), mindestens eine Schnittstelle (12) zum Einlesen mindestens eines synthetischen Datenpunkts (SD) und eine Recheneinrichtung (15) und mindestens eine Schnittstelle (16) zur Ausgabe eines Klassifikationsergebnis umfasst, wobei das System (10) konfiguriert ist, ein Verfahren gemäß einem der Ansprüche 10 bis 12 durchzuführen.

**15.** Computerprogrammprodukt mit einem Computerprogramm, wobei das Computerprogramm Softwaremittel zur Ausführung ausgewählter oder aller Schritte des Verfahrens nach einem der Ansprüche 1 bis 9 oder des Verfahrens nach einem der Ansprüche 10 bis 12 umfasst, wenn das Computerprogramm von oder in einem Computer oder einem Automatisierungssystem ausgeführt wird.

**Geänderte Patentansprüche gemäss Regel 137(2) EPÜ.**

**1.** Computerimplementiertes Verfahren zur Erzeugung von mindestens einem synthetischen Datenpunkt (SD) umfassend den Schritt:

a. Erzeugen des mindestens einen synthetischen Datenpunkts (SD), der einer Klasse aus einer Menge vorbestimmter Klassen zugeordnet ist, mit einem maschinell erlernten generativen Modell (GM), wobei das generative Modell (GM) basierend auf einem Generierungs-Trainingsdatensatz (GTD) unter Verwendung einer Verlustfunktion trainiert ist, wobei die Verlustfunktion in Bezug auf eine Unähnlichkeit zwischen einem Trainings-Eingangsdatenpunkt (GTED) und einem mit dem generativen Modell (GM) erzeugten Ausgangsdatenpunkt eine monoton steigende Funktion ist,

wobei die Verlustfunktion in Bezug auf eine Klassifizierbarkeit des erzeugten Ausgangsdatenpunkts durch ein maschinell erlerntes Klassifikationsmodell (KM) eine monoton fallende Funktion ist,
**dadurch gekennzeichnet, dass**
die Klasse aus der Menge vorbestimmter Klassen eine Eingangsgröße für die Erzeugung des synthetischen Datenpunkts (SD) bildet.

**2.** Verfahren nach Anspruch 1, **dadurch gekennzeichnet, dass** ein erstes Argument der Verlustfunktion die Unähnlichkeit und ein weiteres Argument die Klassifizierbarkeit repräsentiert.

**3.** Verfahren nach Anspruch 1 oder 2, **dadurch gekennzeichnet, dass** die Unähnlichkeit und die Klassifizierbarkeit bei der Auswertung der Verlustfunktion verschieden gewichtet werden.

**4.** Verfahren nach einem der vorangegangenen Ansprüche, **dadurch gekennzeichnet, dass** das maschinell erlernte Klassifikationsmodell (GM) mit einem Klassifikations-Trainingsdatensatz (KTD) trainiert wird, wobei der Klassifikations-Trainingsdatensatz (KTD) als Trainings-Eingangsdatenpunkte zumindest einen Teil der Trainings-Eingangsdatenpunkte (GTED) des Generierungs-Trainingsdatensatz (GTD) umfasst.

**5.** Verfahren nach Anspruch 4, **dadurch gekennzeichnet, dass** der Klassifikations-Trainingsdatensatz (KTD) zusätzlich noch Rausch-Eingangsdatenpunkte (RD) umfasst.

**6.** Verfahren nach Anspruch 5, **dadurch gekennzeichnet, dass** die Rausch-Eingangsdatenpunkte (RD) gemäß eines vorbestimmte Rauschmodells (RM) erzeugt werden.

7. Verfahren nach einem der vorangegangenen Ansprüche, **dadurch gekennzeichnet, dass** ein Eingangsdatenpunkt für einen Inferenzprozess unter Anwendung des generativen Modells (GM) ein Rausch-Eingangsdatenpunkt ist, der gemäß einem Rauschmodell (RM) erzeugt wird, welches zum Erzeugen von Rausch-Eingangsdatenpunkten (RD) für das Training des Klassifikationsmodells (KM) dient.

8. Verfahren nach einem der vorangegangenen Ansprüche, **dadurch gekennzeichnet, dass** in einem Inferenzprozess unter Anwendung des generativen Modells (GM) schrittweise verschiedene Datenpunkt-Instanzen (SD(k)) erzeugt werden, wobei nach jedem Schritt (k) geprüft wird, ob die im jeweiligen Schritt (k) erzeugte Datenpunkt-Instanz (SD(k)) ein vorbestimmtes Abbruchkriterium erfüllt, wobei der synthetische Datenpunkt (SD) als die im Schritt erzeugte Datenpunkt-Instanz (SD(k)) bestimmt wird, wenn das Abbruchkriterium erfüllt ist.

9. Verfahren nach Anspruch 8, **dadurch gekennzeichnet, dass** das Abbruchkriterium erfüllt ist, wenn die Datenpunkt-Instanz (SD(k)) mit dem Klassifikationsmodell (KM) korrekt klassifizierbar ist und/oder eine instanzspezifische Konfidenz höher als ein vorbestimmter Schwellwert ist.

10. Verfahren zur Klassifizierung eines Eingangsdatenpunkts (ED), wobei zumindest ein synthetischer Datenpunkt (DP) mit einem Verfahren gemäß einem der Ansprüche 1 bis 9 erzeugt wird, wobei die Klassifizierung in Abhängigkeit des zumindest einen synthetischen Datenpunkts (DP) erfolgt.

11. Verfahren nach Anspruch 10, **dadurch gekennzeichnet, dass** in Abhängigkeit des zumindest einen synthetischen Datenpunkts (DP) ein Ersatz-Klassifikationsmodell erzeugt wird, das zur Klassifizierung des Eingangsdatenpunkts (ED) verwendet wird.

12. Verfahren nach einem der vorangegangenen Ansprüche, **dadurch gekennzeichnet, dass** eine Mehrzahl von synthetischen Datenpunkten (SD) erzeugt wird, wobei die Klassifikation abhängig von einem Ähnlichkeitsmaß zwischen den synthetischen Datenpunkten (SD) und dem Eingangsdatenpunkt (ED) erfolgt.

13. System zur Erzeugung von mindestens einem synthetischen Datenpunkt (SD), umfassend eine Schnittstelle (2) zur Ausgabe des mindestens einen synthetischen Datenpunkts (SD) sowie eine Recheneinrichtung (8) zum Ausführen eines maschinell erlernten generativen Modells (GM), wobei das System (2) konfiguriert ist, ein Verfahren gemäß einem der Ansprüche 1 bis 9 durchzuführen.

14. System zur Klassifizierung eines Eingangsdatenpunkts (ED), wobei das System (10) mindestens eine Schnittstelle (11) zum Einlesen des Eingangsdatenpunkts (ED), mindestens eine Schnittstelle (12) zum Einlesen mindestens eines synthetischen Datenpunkts (SD) und eine Recheneinrichtung (15) und mindestens eine Schnittstelle (16) zur Ausgabe eines Klassifikationsergebnis umfasst, wobei das System (10) konfiguriert ist, ein Verfahren gemäß einem der Ansprüche 10 bis 12 durchzuführen.

15. Computerprogrammprodukt mit einem Computerprogramm, wobei das Computerprogramm einen Computer zur Ausführung aller Schritte des Verfahrens nach einem der Ansprüche 1 bis 12 veranlasst, wenn das Computerprogramm auf einem Computer abläuft.

Fig.1

Fig.2

Fig.3

Fig.4

Fig.5

Fig.6

Europäisches
Patentamt

European
Patent Office

Office européen
des brevets

# EUROPÄISCHER RECHERCHENBERICHT

**Nummer der Anmeldung**

EP 24 21 6346

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KUMAR SATYADWYOOM ET AL: "Towards Robust Certified Defense via Improved Randomized Smoothing", 2022 INTERNATIONAL JOINT CONFERENCE ON NEURAL NETWORKS (IJCNN), IEEE, 18. Juli 2022 (2022-07-18), Seiten 1-8, XP034199172, DOI: 10.1109/IJCNN55064.2022.9892471 [gefunden am 2022-09-30] * Abbildung 1 * * Abschnitte IV.A und IV.B * ----- | 1-3,8-15 | INV. G06N3/045 G06N3/0475 G06N3/09 ADD. G06N3/047 G06N3/0895 G06N3/0464 |
| X | CHANDRAMOULI SASTRY ET AL: "Training Diffusion Classifiers with Denoising Assistance", ARXIV.ORG, CORNELL UNIVERSITY LIBRARY, 201 OLIN LIBRARY CORNELL UNIVERSITY ITHACA, NY 14853, 15. Juni 2023 (2023-06-15), XP091538788, * Zusammenfassung * * Abschnitt 3 * ----- | 1,4-15 | |

**RECHERCHIERTE SACHGEBIETE (IPC)**

G06N

Der vorliegende Recherchenbericht wurde für alle Patentansprüche erstellt

| Recherchenort | Abschlußdatum der Recherche | Prüfer |
|---|---|---|
| Den Haag | 24. April 2025 | Theissing, Simon |

EPO FORM 1503 03.82 (P04C03)

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20240202405 A1

- US 12008478 B2